# EUROPEAN PATENT SPECIFICATION

(11) **EP 0 774 933 B1**
(45) Date of publication and mention of the grant of the patent: **06.12.2000**
(21) Application number: 94917243.1
(22) Date of filing: 27.05.1994
(51) Int. Cl.: A61C 5/00, A61C 5/10, A61C 13/00

(54) **METHOD OF MANUFACTURING CERAMIC TOOTH RESTORATIONS**
VERFAHREN ZUR HERSTELLUNG KERAMISCHEN ZAHNERSATZES
PROCEDE DE PRODUCTION DE RECONSTITUTIONS DE DENTS EN CERAMIQUE

(30) Priority: 27.05.1993 SE 9301810
(43) Date of publication of application: 28.05.1997
(73) Proprietor: SANDVIK AKTIEBOLAG, 811 81 Sandviken (SE); Nobelpharma AB, S-402 26 Göteborg (SE)
(72) Inventor: ODEN, Agneta, S-182 74 Stocksund (SE); ANDERSSON, Matts, S-443 39 Lerum (SE); ANTONSON, Izidor, S-433 30 Partille (SE)
(74) Representative: Östlund, Alf Olof Anders
(86) International application number: SE9400507
(87) International publication number: WO9427517

(56) References cited:
- US-A- 5 080 589
- US-A- 5 106 303

## Description

The present invention relates to powder metallurgical manufacturing methods of accurate-to-shape tooth restorations with an individually manufactured core in a densely sintered, high strength ceramic material, which fits against prepared tooth surfaces or artificial abutments. On these cores dental porcelain can be fired to tooth crowns, inlays, veneers or bridges.

Swedish patent application 8900620-9 discloses a method of manufacturing ceramic bodies with irregular shapes where the sintering shrinkage is considered.

US 5,080,589 discloses a method of manufacturing copings in densely sintered high strength ceramic material where the sintering shrinkage is considered. According to this patent the copings are premanufactured, which means that they have in advance given dimensions.

According to US 5,106,303 and Swedish patent application 9002959-6 inlays, onlay crowns and veneers can be manufactured in densely sintered high strength ceramic material by copy milling a green body or a presintered or sintered body from an impression of the prepared tooth surface considering the sintering shrinkage.

The object of the present invention is to provide rational manufacturing technique for manufacturing tooth crowns, inlays, veneers or bridges in densely sintered, high strength ceramic material by using modern powder metallurgical technique, reading technique and machining technique.

The present invention relates to a method of manufacturing artificial tooth restorations for natural teeth or implants containing an individual core in densely sintered, high strength ceramic material with dental porcelain fired to its outer surface. The inner surface of the core, which will fit to one or more prepared surfaces or artificial abutments is manufactured by forming a ceramic powder mixture against a surface of a body which surface is manufactured by registering with a three dimensional optical or mechanical reading method the prepared surfaces of the prepared teeth or artificial abutments and their mutual relationship, either directly in the mouth or on a model in e.g. plaster after which the registered surfaces are reproduced in an enlarged size into a carrier e.g. by using a computer controlled milling machine, the enlargement being calculated considering the shrinkage of the ceramic material during the sintering to full density with the addition of a desired gap for cement. The carrier is made from a model material e.g. plaster, graphite or a polymer.

In some cases the outer surface of the core can be surrounded by prepared tooth surfaces e.g. inlays. The core is manufactured in this case by first compacting a ceramic powder against a carrier, which partly has an outer shape, which is smaller than the outer surface of the core, which will fit against the prepared tooth surfaces. Then the outer shape of the core is made by milling the green body in the milling machine. In order to make it possible to machine the outer surface, the prepared surfaces are registered and their mutual relationship determined with a three dimensional optical or mechanical scanning technique, either directly in the mouth or on a model in some model material e.g. plaster or on an impression with some impression material e.g. addition-silicon or a wax impression, from the prepared surfaces. The registered surfaces are reproduced in an enlarged size onto a carrier, e.g. with a computer controlled milling machine, which machines the powder compacted against the carrier. The enlargement is calculated from the sintering shrinkage of the ceramic material upon sintering to full density. In this case a reduction is made for desired gap for cement.
Fig. 1 shows cross sections of natural tooth one with an artificial tooth crown (Fig. 1a), one with an inlay (Fig. 1b), and one with a veneer (Fig. 1c). In this figure A= dental porcelain, B= core, Y= outer surface of the core, I= inner surface of the core which will fit against the prepared surface, C= cement, P= prepared surface of the tooth, S= preparation border, E= enamel, D= dentine and F= pulp.

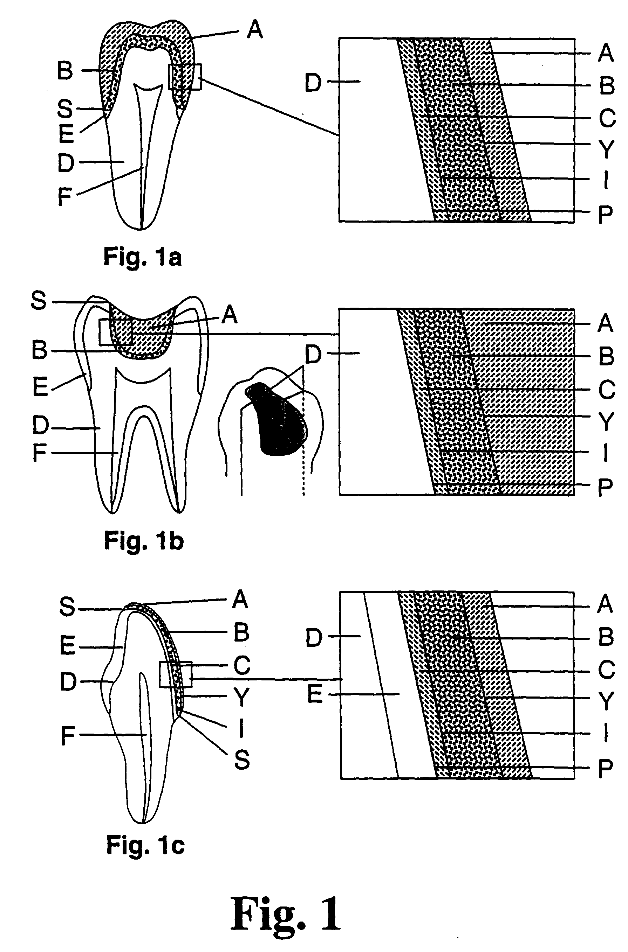

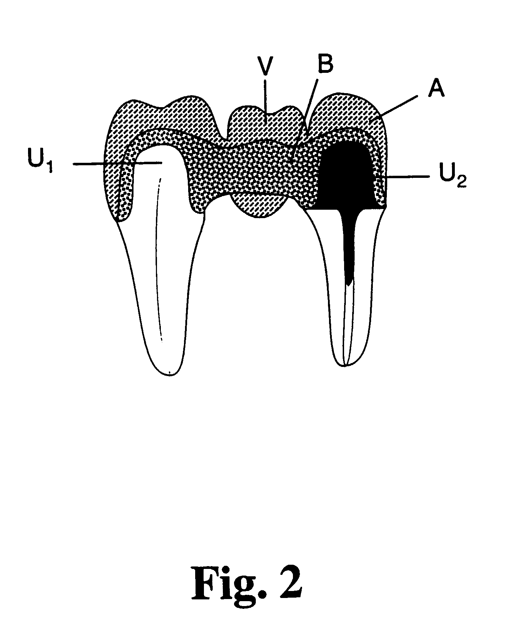

Fig. 2 shows a cross section of a bridge, which is cemented on two supporting teeth. These supporting teeth can have a vital abutment (U₁) or an artificial abutment (U₂) manufactured in a dental alloy, ceramic material or a strengthened polymer. The bridge in this figure contains two artificial dental crowns according to Fig. 1a and with a pontic (V) between as replacement for a lost tooth. The bridge contains a core (B) with dental porcelain (A). A bridge can contain more supporting teeth and also more pontics in between. The supporting teeth can also be prepared for inlays or veneers. Veneers can be made both on buccal and lingual surfaces. The supporting teeth can also be implants with artificial abutments.
Figs. 3a and b show a cross section of a cylindrical blank K₁ manufactured in e.g. plaster, graphite or a polymer. K₁ has the diameters Φ₁ and Φ₂, and a groove Q₁ for repositioning in a chucking fixture in a milling machine and a bevel Z₁.
Fig 3c shows K_{oc}, a model of a tooth prepared for a crown. P is the prepared tooth surface and S the preparation border.
Fig 3d shows K₂, is a cross section of a reproduction with enlarged size of K_{oc} produced in a computer controlled milling machine from a blank K₁. The enlargement is calculated considering the sintering shrinkage of the ceramic material. L₂ is a reproduction of the prepared tooth surface (P) and is defined as the surface above the preparation border S₂.
Fig 3e shows K₃ which is K₂ with a shell of 1-1,5 mm outside the enlarged surface (L₂). L₃ is the outer surface of this shell. L₃ is finished with the border S₃.
Fig. 4 shows a cross section of an example of a press for individual cores for tooth restorations. F is a cylindrical tube. G is a cylindrical plate with the diameters Φ 3 and Φ₄. H is a cylinder with diameter Φ₃. H, F, and G can be made in e.g. hardened steel E is made in a viscous elastic material as well as J and X. X is an impression from K₃ except the part with the diameter Φ₁. X has a cylindrical outer shape with diameter Φ₃. In Fig. 4 K₂ has been placed in X, M is a cavity with space for ceramic powder and P_{K} is the force with which H is pressed against G.

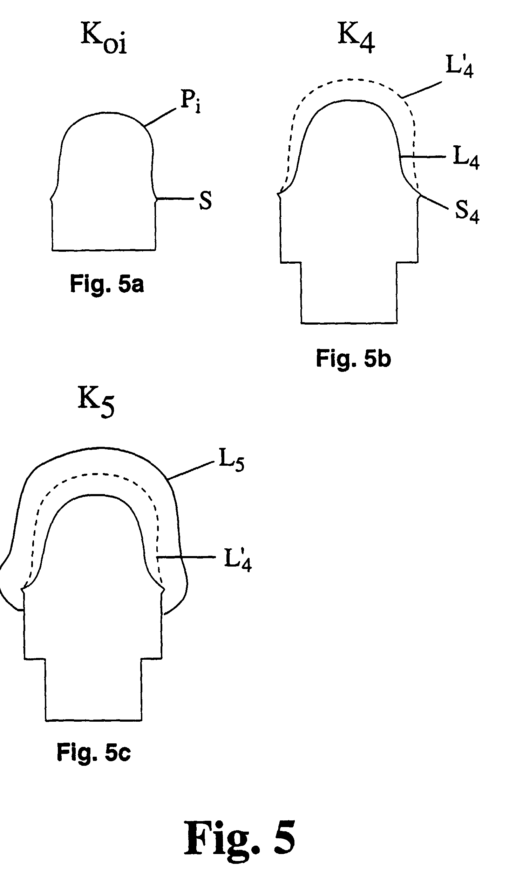

Fig. 5a shows Kₒᵢ, which is a cross section of an impression of an inlay. The surface Pᵢ is an impression of the prepared surface of the inlay (P) (Fig. 1b) and S is the preparation border. Figs. 5b and 5c show a cross section of K₄ (Fig 5b) and K₅(Fig 5 c), which are used for manufacturing of cores for inlays. K₄ is a model of Kₒᵢ enlarged considering the sintering shrinkage. K₄ can be made by milling in a computer controlled milling machine from a blank K₁ in plaster, graphite or a polymer. In this figure the surface L'₄ (broken line) has been drawn. L'₄ is the enlarged surface of the inlay, which exactly fits against the prepared surface (P) of the tooth prepared for an inlay. S₄ marks the preparation border. L₄ is the milled surface of K₄. The distance between L₄ and L'₄ is equal to the thickness of the core in unsintered condition. K₅ consists of K₄ with a shell of 1,5 - 3 mm outside the continuous surface L₄. L₅ is the outer surface of this shell.
Fig. 6 shows K_{ob}, which is a cross section of a model of two supporting teeth c₁ and c₂ prepared for crowns and intermediate gingiva.
Fig. 7 shows K₆, which is an enlarged model of K_{ob}. The enlarged supporting tooth of K'₆ are C₁ and C₂. The model can be cut at the lines l₁. and l₂.
Fig. 8 shows the enlarged model from Fig. 7 with a shell with outer contour L₈, which surrounds the preparations C₁ and C₂ and intermediate gingiva.

As can be seen from Fig. 1 and Fig. 2 artificial tooth crowns, inlays, veneers or bridges are made as a core in densely sintered ceramic (B) with dental porcelain (A) fired to the outer surface (Y) or the core. The tooth restorations are fixed to the prepared surfaces(P) by e.g. adhesive (cement), as well as the bridge to the abutments U₁ and U₂. The thin layer of cement (C) connects the prepared tooth surface (P) with the inner surface of the core (I), which fits with desired precision to the prepared surface (P). On the outer surface (Y) of the core (B) dental porcelain can be fired. The layer of cement can have a thickness <100 µm, preferably 25-50 µm. The cement thickness can at some spots be > 100 µm depending on small irregularities in the preparation. The cementing of the restorations can be made with e.g. phosphate cement, glass ionomer cement or some resin cement in accordance with known techniques. In the latter instance, it can be an advantage to silane treat the inner surfaces (I) of the cores of the constructions, which are to be joined with the prepared surfaces (P). It also can be advantageous to etch the prepared surface (P), which consists of enamel (E) before the cementation of the veneer with resin cement. The etchant can be phosphoric acid. Parts of the prepared surface consisting of dentine can be treated with some bonding resin before the cementation.

The ceramic powder can be made by several well known methods. Traditional powder metallurgical technique can be used, where the different components are mixed and ground under dry or wet conditions with water or an inorganic solvent (e.g. alcohol) as grinding liquid. To the ceramic slurry lubricants or other organic binders are added, when needed at suitable time in the process in accordance with known techniques.

The ceramic base material in the core is suitably one or several biocompatible oxides, alternatively with additives of carbides and nitrides with or without binders. Examples of biocompatible oxides, which can form the base matrix for the ceramic body, are Al₂O₃, TiO₂, MgO, ZrO₂ and ZrO₂ with additives of smaller amounts of up to 10 mole% of Y₂O₃ or MgO (partly or totally stabilised ZrO₂). Included components can be present as particles with a size of <25 µ m, preferably <10 µm, and/or as whiskers (hair shaped single crystals) with a length of >10 µm, preferably >25 µm, and a length to diameter ratio >5, preferably >10 and/or fibres (polycrystalline) with a diameter >10 µm and/or as single crystal platelets with an approximate diameter of 5-50 µm and a thickness of 1-10 µm. The amount of whiskers, fibres and/or platelets should not exceed 60 volume%. In a preferred embodiment the ceramic material comprises >50% Al₂O₃ with additives of conventional sintering aids. In order to increase the strength <25 weight %, preferably 3-12 weight %, of ZrO₂, and/or 5-40 weight%, preferably 10-30 weight%, of SiC-, TiN- or ZrN-whiskers can be added. It is important that the ceramic material is sintered to closed porosity, which for an oxide material means at least 98% of theoretical density, but in order to ensure good mechanical strength the material should preferably have a density over 99%, while densities over 99.5% give the best strength.

In order to get a suitable colour of the core (B) coloured components can be chosen. Additives e.g. 0.1-1 weight % of TiN and/or ZrN will give Al₂O₃ based cores a faint yellow shade. Fe₂O₃ gives a yellow brown shade and MnO₂ gives a rose-coloured shade. Of course additives, which give unesthetic effects, should not be used.

According to the present invention artificial ceramic tooth crowns, inlays, veneers or bridges can now be made from a ceramic powder with additions of lubricants and/or other organic binders. When manufacturing the core of an individual tooth crown, the ceramic powder is compacted against the body K₂ to a core, which after sintering to full density fits to the prepared tooth surface and with an as close to desired wall thickness as possible. When manufacturing the enlarged model (K₂) the sintering shrinkage has to be considered by enlarging the surface (L₂) so that the compacted body during the subsequent sintering process to full density, with great accuracy will have desired final, inner geometrical shape (I), which fits against the prepared surface (P). The desired shape of the gap between the tooth crown and the prepared tooth for cementing the crown to the prepared tooth must also be considered. The size of this gap can be calculated e.g. to be as small as possible at the preparation border preferably as close to zero as may be achieved during the manufacturing process.

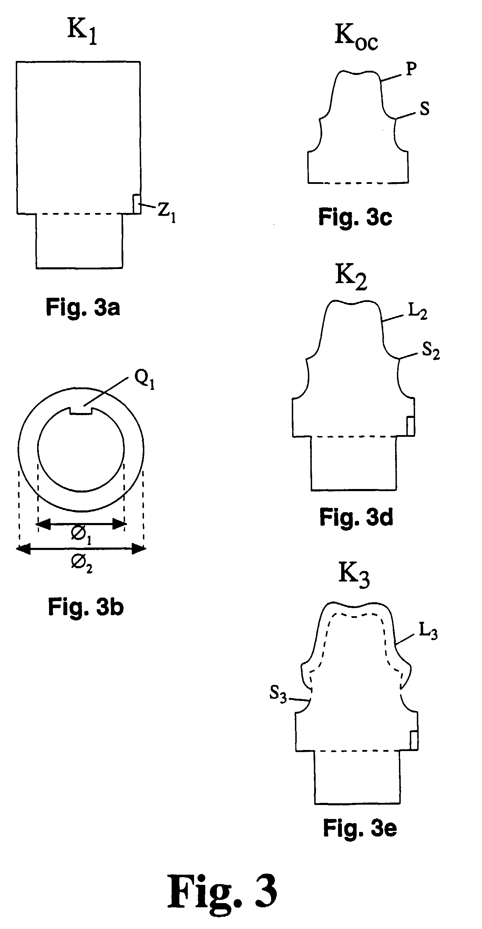

The manufacturing of an individual core of a tooth crown can be made in the following way: A body K₂ is manufactured from a blank K₁ by registering a prepared tooth surface with a three dimensional optical or mechanical reading method. The registered surface is transferred to a computer controlled milling machine, which gives the shape of K₂ based on the data from the registration and data about the sintering shrinkage and desired shape of gap for cement. A body K₃ is manufactured from the above registered surface, with the addition of a shell of 1,5 - 3 mm according to Fig. 3e. The tool X is manufactured by placing K₃ in a mould in which a viscous elastic material e.g. an Addition-silicone, which is allowed to harden. The tool X can also be made using the blank K₁ or a somewhat reduced K₁ instead of K₃. When using K₁ to manufacture X the amount of ceramic powder will increase and at the same time more compacted powder has to be milled. The advantage is that this tool X can be used for different sizes of preparations and the bevel Z₁ is not needed. Ready to press ceramic powder is placed in the cavity (M) of X and the body K₂ is placed in X. It can be an advantage to treat the surface L₂ of K₂ with a thin layer of an adhesive material to increase the adhesion of the ceramic powder to K₂. K₂ is fixed with help of the bevel Z₁. J is placed on K₂ and X with content in the tube F. E is put in place as well as the cylinder H whereupon the tube F with content is placed on the cylindrical end plate G. The whole tool according to Fig. 3 is placed in a uniaxial press e.g. a hydraulic press. During the compaction of the powder the cylinder H is pressed with the compaction force Pₖ into the tube F against the cylinder end plate G in contact with the elastic material J. During pressing, the powder is compacted against the body K₂. After the compaction, H, J and K₂ are removed with compacted powder, which adheres to K₂. If a dry bag isostatic press is used the tool X is not needed at all. The ceramic powder is just compacted against the body K₂ treated with an adhesive material.

After the compaction of the ceramic powder against K₂ this carrier is repositioned in the computer controlled milling machine. The groove Q1 and to this matching pin in the chucking fixture of the milling machine makes it possible to reposition in direction of rotation and the step between the diameters Φ₁ and Φ₂ in axial direction. The outer surface of the coping is machined after repositioning in the milling machine. The outer surface can be calculated by the computer, which controls the milling machine. The outer surface can also be made from data of a scanned coping, which is modelled in e.g. wax and which before the scanning is fixed on the model of the prepared tooth. The machining can be controlled by the computer so that the coping gets the desired outer form and be adapted to the preparation border. The shell thickness of the core can be 0,3 - 1 mm, however, in certain places shell thicknesses >1 mm can be needed for strengthening or other reasons. It is also possible from data of contact conditions with neighbouring teeth in the same or opposite jaw to machine a complete ready tooth or from scanned data from a crown, which is modelled in e.g. wax and which before the scanning is fixed on the model of the prepared tooth. During all machining in the milling machine the sintering shrinkage is taken into account.

The compacted body is presintered on the carrier K₂ manufactured in the milling machine. For alumina the presintering will be at 800°C - 1000°C on the carrier. During the presintering the model material (plaster) will dehydrate, which results in a shrinkage of about 15%. The ceramic material will shrink just a few percent during presintering. The presintered core will, thus, be too large on the plaster model and can be removed and be sintered to full density. Instead of plaster investment materials can be used provided that they have enough strength and will not deform during the powder compaction. The carrier K₂ can also contain a material e.g. graphite or a polymer which will burn slowly during the presintering period. It is important that the thermal expansion coefficient of the carrier material is less than the thermal expansion coefficient of the ceramic material, and the adhesive material must disappear during presintering without having any effects on the sintered copings.

In the same way as a tooth crown above a veneer can be manufactured.

A core (B) for an inlay can be manufactured by registering with a three dimensional optical or mechanical method the tooth prepared for an inlay (Fig. 1b) or an impression Kₒᵢ(Fig. 5a) from the prepared cavity. Data from the registered prepared surface guides a computer controlled milling machine for the manufacture of the body K₄(Fig. 5b) from a blank K₁(Fig. 3a) e.g. in plaster, graphite or a polymer. When the scanned impression from the inlay is enlarged taking into account both the shrinkage and the gap for cement, L'₄(Fig 5b) is obtained. From this surface L₄ is calculated. L₄ is the outer surface of the inlay, i.e. the surface at which porcelain can be fired in order to get the inlay ready. K₅ is manufactured in e.g. plaster or some easily machined shape resistant material.

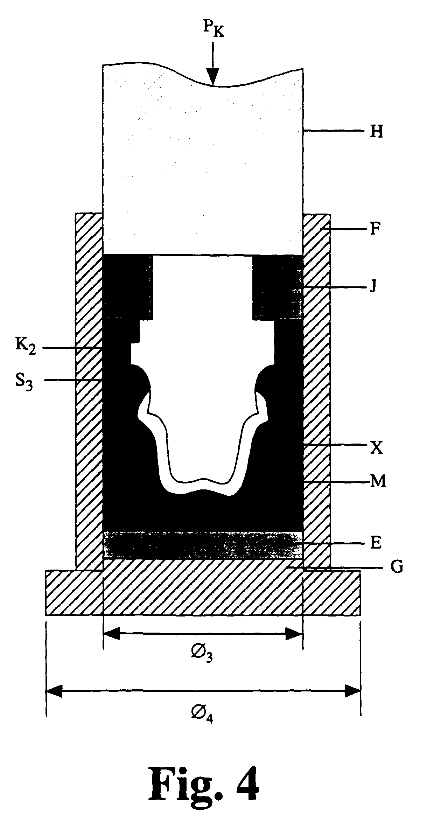

In the same way, as during the manufacturing of a core for a tooth crown an impression X for an inlay in some viscous elastic material (Fig. 4) can be manufactured. This impression (X) is then placed in the press in the same way, as described in Fig. 4 after the powder has been placed in the cavity (M) between the enlarged model (K₄) and the impression X. During the pressing procedure the powder is compacted against the body K₄. After the pressing procedure K₄ is repositioned in the computer controlled milling machine. The outer surface of the inlay (L'₄) is machined after the repositioning in the milling machine.

The compacted body is presintered on the enlarged plaster model K₄. The shape of L₄ gives the outer shape of the core of the inlay. Against this surface porcelain can be fired. In order to increase the aesthetics of the inlay the thickness of the core can be thinnest at the preparation border in order to be able to hide the core after the porcelain firing, if desired. During the modelling of the porcelain powder against the core, this is placed in the inlay preparation in the original model of the prepared tooth. The core is generally placed in a pinned and sawed model from the whole jaw.

The inlay is made in a conventional way with porcelain powders. During firing the inlay is removed from the model and is fired in a porcelain furnace. Several firings with subsequent adjustments may be needed before the inlay is ready for final adjustment. Against the core dental polymers can also be attached. These polymers then will give the inlay its final shape. It is an advantage if the outer surface of the core is silaniced before the polymer is joined together with the core. Finally, it is possible to give L₄ such a shape that the inlay contains only densely sintered ceramic material. It is then important that the outer surface, which has contact with other teeth, is polished so that the roughness of the surface will not give wear damage on teeth in the opposite jaw.

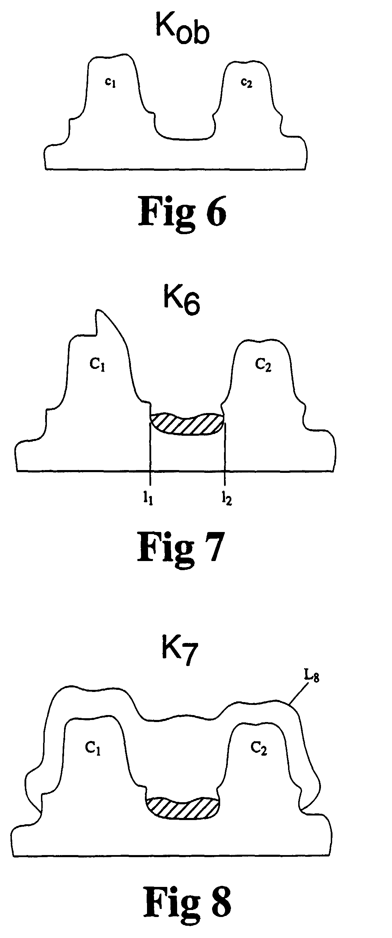

A bridge can be manufactured by first registering with a three dimensional optical or mechanical method the prepared surfaces of the supporting teeth and intermediate part from a model in plaster (Fig. 6) or directly in the mouth. Prepared teeth and intermediate part of the jaw are reproduced considering the sintering shrinkage in an enlarged size with e.g. a computer controlled milling machine (Fig. 7). At the sane time a gap for cement is calculated in the same way as for single crowns. Before the enlarged model is scanned, a pontics can be built up e.g. in wax on the fixture between C₁ and C₂. This substructure can also be calculated in the computer. Such a substructure can be seen in Fig. 7. The material in the enlarged models can be e.g. plaster, graphite or a polymer.

The compaction of the ceramic powder to a bridge is made in a similar way as for copings of crowns and inlays. When manufacturing a bridge an impression X is made, which leaves space for the powder both for a beam connecting the two copings and the two copings. The principal appearance of the body K₇, which is used for manufacturing of an impression X for manufacturing of a core of a bridge in densely sintered ceramic material, is shown in Fig. 8. The impression X is made in the same way, as is described for single cores for tooth crowns. In the empty space, which surrounds C₁, C₂ and the intermediate gingiva, ceramic powder is placed, whereupon the tool X is placed in a pressing tool in the same way as for a single crown and a pressure Pₖ is applied. The ceramic powder will be compacted against C₁ and C₂ and against that part of the enlarged model, which is between C₁ and C₂. After repositioning in the milling machine the outer surface of the compacted body is machined and the core is presintered in the same way as single copings. Before presintering the support, i.e. the enlarged model described in Fig. 7, can be cut at the lines l₁ and l₂ in order not to break the core during presintering if plaster is used in the carrier. This division can be made before or after the compacting of the powder. It is important that the three parts are fixed during compacting of the powder in order to maintain their mutual positions. After presintering the core is adjusted, especially on the parts which could not be machined before presintering. This final adjustment can be made with a hand piece whereafter the core is sintered.

A bridge can also be made, which is based on supporting teeth, which have a preparation on the buccal surface for a veneer or a preparation in the lingual side for a lingual plate. The manufacturing of such a bridge will be the same as has been described above for a bridge with supporting teeth prepared for crowns.

## Claims

1. Method of manufacturing an artificial tooth restoration comprising a ceramic, densely sintered high strength individual core (B) with dental porcelain (A) by powder metallurgical manufacturing methods
**characterised** in that the inner surface (I) of the core (B), which will fit against one or more prepared tooth surfaces (P) or artificial abutments are manufactured by forming a ceramic powder mixture against a surface of a body at which said surface is manufactured by registering the surfaces of the prepared teeth or artificial abutments and their mutual relationship with a three dimensional optical or mechanical reading method either directly in the mouth or on a model in e.g. plaster after which the registered surfaces are reproduced in an enlarged size e.g. with a computer controlled milling machine at which the enlargement is calculated from the shrinkage of the ceramic material during sintering to full density with adjustment of (I) considering desired gap for cement.

2. Method according to claim 1
**characterised** in that the core is manufactured by dry pressing a ceramic powder with a rubber tool X made from some viscous elastic material, close to desired size against the enlarged preparations K₂, K₄ and K₆ made by milling of premade plaster, graphite or polymer blanks.

3. Method according to claim 2
**characterised** in that the rubber tool X is made by taking an impression of the body K₃, K₅ or K₇, manufactured from the enlarged preparations K₂, K₄ or K₆, with the addition of a shell of 1,5 - 3 mm.

4. Method according to claims 2 and 3
**characterised** in that after compacting of the ceramic powder against K₂, K₄ or K₆, K₂, K₄ or K₆ are repositioned in the milling machine at which the outer contour of the core is milled to desired shape, whereupon the core is presintered on K₂, K₄ or K₆.

5. Method according to claims 2, 3 and 4
**characterised** in that the presintered core is removed from K₂, K₄ or K₆ and is sintered to full density.

6. Method according to claims 1, 2, 3 and 4
**characterised** in that the core material consists of high strength, densely sintered ceramic material with a relative density of >99%.

7. Method according to claim 5
**characterised** in that the ceramic material in the core is based on one or more of the oxides Al₂O₃, TiO₂, MgO, ZrO₂ or ZrO₂ with up to 25 mole% Y₂O₃ or MgO.

8. Method according to claims 5 and 6
**characterised** in that the core material also comprises whiskers and/or particles of SiC, TiN, ZrO₂ and/or ZrN.

## Patentansprüche

1. Verfahren zur Herstellung eines künstlichen Zahnersatzes, der einen keramischen, dichtgesinterten Einzelkern hoher Festigkeit (B) mit Dentalporzellan (A) umfaßt, durch pulvermetallurgische Herstellungsmethoden, **dadurch gekennzeichnet**, daß die Innere Oberfläche (I) des Kernes (B), welche an eine oder mehrere präparierte Zahnoberflächen (B) oder künstliche Widerlager paßt, hergestellt wird, indem ein Keramikpulvergemisch an einer Oberfläche eines Körpers gebildet wird, an welchem diese Oberfläche durch registerhaltiges Anordnen der Oberflächen der präparierten Zähne oder der künstlichen Widerlager und ihrer wechselseitige Lage mit einer dreidimensionalen optischen oder mechanischen Lesemethode entweder direkt im Mund oder an einem Modell zum Beispiel aus Gips hergestellt wird, wonach die registerhaltig angeordneten Oberflächen in einem vergrößerten Maßstab zum Beispiel mit einer computergesteuerten Fräsmaschine reproduziert werden, bei welcher die Vergrößerung aus der Schrumpfung des keramischen Materials während des Sinterns zur vollständigen Dichte von (I) unter Berücksichtigung eines erwünschten Spaltes für Zement berechnet wird.

2. Verfahren nach Anspruch 1, **dadurch gekennzeichnet**, daß der Kern durch trockenes Pressen eines keramischen Pulvers mit einem Kautschukwerkzeug X, das aus einem viskosen elastischen Material hergestellt ist, nahe der erwünschten Größe gegen die vergrößerten Präparate K₂, K₄ und K₆ hergestellt wird, die durch Fräsen vorher gefertigter Gips-, Graphit- oder Polymerrohlinge hergestellt wurden.

3. Verfahren nach Anspruch 2, **dadurch gekennzeichnet**, daß das Kautschukwerkzeug X hergestellt ist, indem man einen Abdruck des Körpers K₃, K₅ oder K₇, der aus den vergrößerten Vorpräparaten K₂, K₄ oder K₆ gefertigt wurde, unter Zusatz einer Schale von 1,5 bis 3 mm abnimmt.

4. Verfahren nach den Ansprüchen 2 und 3, **dadurch gekennzeichnet**, daß nach dem Verdichten des Keramikpulvers an K₂, K₄ oder K₆ K₂, K₄ oder K₆ in der Fräsmaschine wieder positioniert werden, bei welcher der Außenumriß des Kerns zu der erwünschten Form gefräst wird, worauf der Kern auf K₂, K₄ oder K₆ vorgesintert wird.

5. Verfahren nach Anspruch 2, 3 und 4, **dadurch gekennzeichnet**, daß der vorgesinterte Kern von K₂, K₄ oder K₆ entfernt und zu vollständiger Dichte gesintert wird.

6. Verfahren nach Anspruch 1, 2, 3 und 4, **dadurch gekennzeichnet**, daß das Kernmaterial aus dichtgesintertem Keramikmaterial hoher Festigkeit mit einer relativen Dichte von >99 % besteht.

7. Verfahren nach Anspruch 5, **dadurch gekennzeichnet**, daß das Keramikmaterial in dem Kern auf einem oder mehreren der Oxide Al₂O₃, TiO₂, MgO, ZrO₂ oder ZrO₂ mit bis zu 25 mol% Y₂O₃ oder MgO beruht.

8. Verfahren nach den Ansprüchen 5 und 6, **dadurch gekennzeichnet**, daß das Kernmaterial auch Whisker und/oder Teilchen von SiC, TiN, ZrO₂ und/oder ZrN umfaßt.

## Revendications

1. Procédé de fabrication d'une reconstitution de dents artificielles comprenant un noyau individuel (B) de résistance mécanique élevée, fritté à densité maximale, avec de la porcelaine dentaire (A) grâce à des procédés de fabrication par métallurgie des poudres
caractérisé en ce que la surface intérieure (I) du noyau (B), qui s'adaptera contre une ou plusieurs surfaces de dents préparées (P) ou un ou plusieurs piliers artificiels est fabriqué en formant un mélange de poudres de céramique contre une surface d'un corps sur lequel ladite surface est fabriquée en repérant les surfaces des dents ou des piliers artificiels préparés ainsi que leur relation mutuelle au moyen d'un procédé tridimensionnel de lecture optique ou mécanique soit directement dans la bouche, soit sur un modèle par exemple de plâtre après quoi, les surfaces repérées sont reproduites à une taille agrandie par exemple avec une machine de fraisage commandée par ordinateur dans laquelle l'agrandissement est calculé à partir du retrait du matériau céramique durant le frittage jusqu'à une densité maximale avec un ajustement de (I), en prenant en compte l'interstice désiré pour du ciment.

2. Procédé selon la revendication 1,
caractérisé en ce que le noyau est fabriqué par pressage à sec d'une poudre de céramique avec un outil caoutchouteux X fait à partir d'un quelconque matériau élastique visqueux, de façon proche de la taille désirée contre les préparations agrandies K₂, K₄ et K₆ réalisées par le fraisage d'ébauches de plâtre, de graphite ou de polymère préfabriquées.

3. Procédé selon la revendication 2,
caractérisé en ce que l'outil caoutchouteux X est réalisé en prenant une empreinte du corps K₃, K₅ ou K₇, fabriqué à partir des préparations agrandies K₂, K₄ ou K₆, avec l'ajout d'une enveloppe de 1,5 à 3 mm.

4. Procédé selon les revendications 2 et 3,
caractérisé en ce que, après compactage de la poudre de céramique contre K₂, K₄ ou K₆, K₂, K₄ ou K₆ sont repositionnés dans la machine de fraisage dans laquelle le contour extérieur du noyau est fraisé à la forme désirée, à la suite de quoi le noyau est préfritté sur K₂, K₄ ou K₆.

5. Procédé selon les revendications 2, 3 et 4,
caractérisé en ce que le noyau préfritté est enlevé de K₂, K₄ ou K₆ et est fritté jusqu'a une densité maximale.

6. Procédé selon les revendications 1, 2, 3 et 4,
caractérisé en ce que le matériau du noyau est constitué de matériau céramique fritté à densité maximale, à résistance mécanique élevée, présentant une densité relative de > 99 %.

7. Procédé selon la revendication 5,
caractérisé en ce que le matériau céramique dans le noyau est à base d'un ou plusieurs des oxydes Al₂O₃, TiO₂, MgO, ZrO₂ ou ZrO₂ avec jusqu'à 25 % en moles de Y₂O₃ ou MgO.

8. Procédé selon les revendications 5 et 6,
caractérisé en ce que le matériau du noyau comprend également des barbes et/ou des particules de SiC, TiN, ZrO₂ et/ou ZrN.
